Europäisches Patentamt

(19) European Patent Office

Office européen des brevets

(11) Publication number: **0 027 032**
**B1**

(12) **EUROPEAN PATENT SPECIFICATION**

(45) Date of publication of patent specification: **30.05.84**

(51) Int. Cl.³: **B 60 T 15/18, F 16 J 15/32**

(21) Application number: **80303471.9**

(22) Date of filing: **02.10.80**

(54) Improvements relating to self-lapping valves and fluid pressure seals.

(30) Priority: **03.10.79 GB 7934297**

(43) Date of publication of application:
**15.04.81 Bulletin 81/15**

(45) Publication of the grant of the patent:
**30.05.84 Bulletin 84/22**

(84) Designated Contracting States:
**DE GB NL SE**

(56) References cited:
**FR-A-1 227 387**
**FR-A-2 186 100**
**US-A-3 042 431**
**US-A-3 377 076**
**US-A-3 456 991**

(73) Proprietor: **BENDIX LIMITED**
**Douglas Road**
**Kingswood, Bristol BS15 2NL (GB)**

(72) Inventor: **Neal, Brian Patrick**
**Bendix Limited Douglas Road**
**Kingswood Bristol, BS15 2NL (GB)**
Inventor: **Jennison, Paul**
**Bendix Limited Douglas Road**
**Kingswood Bristol, BS15 2NL (GB)**
Inventor: **Corben, David**
**Bendix Limited Douglas Road**
**Kingswood Bristol, BS15 2NL (GB)**
Inventor: **Aggett, Barry**
**Bendix Limited Douglas Road**
**Kingswood Bristol, BS15 2NL (GB)**
Inventor: **Tanner, Desmond John**
**Bendix Limited Douglas Road**
**Kingswood Bristol, BS15 2NL (GB)**

(74) Representative: **Turner, Alan Reginald**
**BENDIX LIMITED Douglas Road**
**Kingswood, Bristol BS15 2NL (GB)**

Courier Press, Leamington Spa, England.

## Description

This invention relates to self-lapping relay valves and fluid pressure seals for such valves.

Self-lapping relay valves usually include a double valve arrangement which controls the connection between a delivery port and an exhaust port or a supply port for connection to a source of supply pressure. The double valve is usually controlled by pressure responsive means which acts in one direction in response to a mechanical force or a control signal pressure in a sense to cause the valve to close a passage between a delivery port and an exhaust port and open a passage from a supply port to the delivery port and acts in the opposite direction in response to delivery port pressure in a sense to cause the value to close off the supply passage and open the exhaust passage. An intermediate, stable lapped condition is usually possible wherein both the said passages are closed. Such a self-lapping valve is disclosed for example in United States Patent Specification No. 3,456,991.

Such valves are commonly employed in wheeled vehicle air braking systems and one problem which can be encountered arises out of oscillation of the pressure responsive means. This is especially likely to occur when a low impedance way through the double valve is provided between the supply port and the delivery port in such a way that the pressure responsive means responds so rapidly to supply port pressure that the pressure responsive means may over-react and overswing to create a temporary vent condition between the delivery port and the exhaust port. This causes undesired oscillation, resulting in vibration, noise, whereof components and wasteful loss of air from the source of supply.

It is known from United States Patent Specification No. 3 042 431 to prevent sticking of an 'O'-ring of a spool valve which is manually operable in one direction and moved by a spring in the other direction, by so designing the ring and its groove that the 'O'-ring is in tension and tends to move out of contact with the surrounding cooperating wall when pressure is relieved.

According to the present invention there is provided a self-lapping relay valve including a double valve arrangement which controls the connection between a delivery port and an exhaust port or a port for connection to a source of supply pressure, a pressure responsive means which in operation is urged in a first direction in response to a force or control fluid pressure in a sense to cause the valve to close a passage from the delivery port to the exhaust port and open a passage from the supply port to the delivery port and which is urged in a second opposite direction in response to delivery port pressure in a sense to cause the valve to close off the supply passage and open the passage to the exhaust port, characterised by said pressure responsive means having a seal which is designed to provide under the influence of fluid pressure an appreciably greater resistance to movement in said second of the said directions than in the first of said directions.

In order that the invention may be more clearly understood and readily carried into effect, the same will be further described by way of example with reference to the accompanying drawing of which:

Fig. 1 illustrates a dual relay valve for use in controlling a delivery pressure from a tractor braking circuit to a braking circuit of a trailer towed by the tractor, and

Fig. 2 illustrates on a larger scale the arrangement of a seal of pressure responsive means employed in the relay valve of Fig. 1.

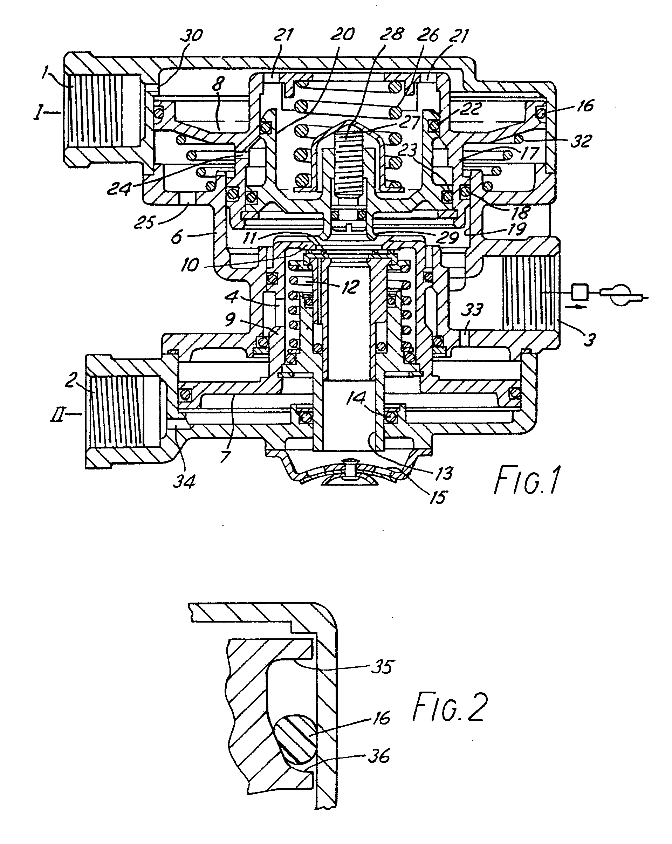

Referring to the drawing, the relay valve of Fig. 1 is intended for use in a dual circuit air pressure braking system for a tractor vehicle which is arranged to tow a trailer. The valve of Fig. 1 is arranged to control the brakes on the trailer in accordance with fluid pressure applied to either or both of two input ports 1 and 2 of the relay valve to control the pressure delivered at the delivery port 3. The pressure at the delivery port 3 is derived from a supply reservoir (not shown) connected to a supply port which is out of sight but is in communication with a chamber labelled with the reference 4.

The relay valve has a valve housing 6 within which there are two co-axial pressure responsive members in the form of pistons 7 and 8. The region above piston 7 communicates with delivery port 3 via an aperture 33 and the region beneath piston 7 communicates with input port 2 via an aperture 34. The piston 7 has a cylindrical extension 9 which is sealingly slidable in the housing and carries a delivery valve seat 10 against which a sealingly slidable tubular valve member 11 is urged by the effects of a housed spring 12. The valve member 11 is itself sealingly slidable within a tubular exhaust part 13 which extends through a seal 14 to the outside of the housing to communicate with atmosphere through an exhaust port and dirt excluder 15.

The piston 8 is subject to pressure at input port 1 via an aperture 30 and is provided with an outer piston seal 16 which will be discussed further with reference to Fig. 2 and a skirt 17 is provided with a further seal 18 of reduced diameter slidable within a reduced diameter cylindrical portion 19 of the housing. Within the piston 8 there is a further slidable piston member 20 the upper surface of which communicates via apertures 21 in the piston 8 with the region above piston 8. The piston member 20 is provided with two ring seals 22 and 23 the space between which communicates with atmosphere via apertures 24 and 25 in the pistons 8 and housing respectively. Captive between the piston 8 and the piston member 20 there is a spring 26 which rests on the underside of the piston 8 and on a cup member 27 which is adjustable by a screw 28 by means of a screw-driver gaining access through the central aperture in 13. The screw 28 thereby can be employed to adjust the compression of the spring 26. Downwardly extending from the piston member 20 there is an exhaust valve seat 29 which is engageable with the upper surface of the valve member 11 within the delivery valve seat 10. The valve 11 is thus operable as a double valve.

The first circuit of a dual foot valve of a braking system is intended to be connected to the control port 1, the second or parallel circuit is intended to be connected to the port 2 and a coupler for providing a control pressure to a trailer when connected to the tractor vehicle is intended to be connected at the delivery port 3. Furthermore, a reservoir on the trailer is intended to be connected to the region 4. Such a valve is described in GB—A—1 294 987.

Ignoring for the present the operation of the second or parallel brake circuit on the tractor vehicle, if a brake pressure in the first brake circuit is introduced at the port 1 which communicates with the region above the piston 8 via aperture 30, on attainment of a pressure sufficient to compress a spring 32 beneath the piston 8, piston 8 is deflected downwardly to carry the inner piston member 20 and the valve seat 29. During such motion, the valve seat 29 engages the valve member 11, closes off the exhaust passage from the delivery port 3 and unseats the valve member 11 from the delivery valve seat 10 against the effect of the spring 12. Supply pressure in chamber 4 is therefore applied to the delivery port 3 and the underside of the inner piston member 20. When a sufficient pressure is obtained beneath the inner smaller diameter piston member 20, the double valve arrangement laps off at a pressure which is proportional to the pressure acting above the piston member 20 with the addition of a pressure increment corresponding to the effect of the spring 26. It will be understood that in such a lapping off action, the piston 8 remains downwardly deflected and the lapping operation occurs by virtue of sealingly slidable movement of the piston member 20 relative to the piston 8. Spring 26 which gives rise to the said increment provides predominance so that trailer control pressure at 3 is greater than control pressure at 1.

When the control pressure at the control port 1 is partially reduced, the piston member 20 first rises in relation to the piston 8 and venting of the delivery port to atmosphere occurs down to a pressure at which the control pressure above the piston member 20 again sufficient to re-close the exhaust port. In the case of a full reduction to atmosphere of the control pressure at the port 1, the piston member 20 rises under the influence of the delivery pressure at the port 3 until the delivery pressure reaches a value corresponding to the thrust of the spring 26 and thereupon the piston 8 returns upwards under the influence of the spring 32. In order to provide braking of the trailer in the event of failure of the circuit supplying the control port 1, the lower piston 7 is also provided which on the presence of a control port pressure at the port 2 acting beneath it rises to carry the valve assembly 11, 12, 13 upwards to seat the valve member 11 against the exhaust valve seat 29 and further movement causes unseating of the delivery valve seat 10 to provide communication between the chamber 4 and the delivery port. The build up of pressure at the delivery port is communicated via aperture 33 to the region above the piston 7 and at a certain value of the delivery pressure, the valve assembly returns downwardly to enable the double valve to lap. Subsequent reduction of the pressure underneath the piston 7 enables the valve assembly to move downwardly to unseat the valve seat 29 and thereby vent some of the output pressure at port 3 to atmosphere before reclosure and lapping takes place. A complete reduction of the control pressure at 2 to atmospheric pressure results in venting of the delivery port 3 and release of the trailer brakes.

In the event of both the circuits 1 and 2 being fully operable, the predominance imposed upon the pressure at the output port 3 by virtue of the presence of the spring 26 associated with the upper piston member 20, ensures that the control pressure at the port 2 which is more or less equal to that at the port 1 does not deflect the piston 7 under such conditions.

Referring to the operation of the upper piston member 20, assuming that the way through from the supply source at chamber 4 is relatively unimpeded, on separation of the valve member 11 from the delivery valve seat 10, an inrush of pressure into the region beneath the piston member may occur which tends to cause the piston member 20 to over-react such as to move rapidly upwards and by virtue of the presence of the spring 26 between piston member 20 and piston 8, such movement is partially transferred to the piston 8 which thereby tends to bounce. The result of such rapid upward movement of the piston member 20 is therefore an intermittent alternate unseating of the seats 10 and 29 from the valve member 11 with resultant venting of the pressure under the piston member 20. Such oscillation of the piston member 20 together with the piston 8 therefore can result in rapid loss of air from the supply reservoir.

In order to reduce the possibility of such oscillation in a valve such as that of Fig. 1 where a low impedance way through for air from supply source to a delivery port is provided, the seal of one or other of the pistons and preferably the outer diameter seal on the piston 8 namely, the seal 16 is designed as shown on enlarged scale in Fig. 2.

In Fig. 2 it will be seen that the annular groove of the piston 8 has a width which is somewhat greater than twice the natural dia-

meter of the resilient O-ring seal 16. The groove is also provided with a depth which varies from the upper flank to the lower flank of the groove such that the depth adjacent the lower flank 36 is approximately half the depth adjacent the upper flank 35. The seal 16 is thus able to move within the annular groove under the influence of applied fluid pressure differential such as to create a reaction between the bottom of the groove and the cylinder wall which owing to the added rolling effect of the O-ring is appreciably greater for upward movement of the piston 8 that it is for downward movement of the piston 8. By such means, the pistons 8 and 20 are thereby designed to have an inherent hysteresis from the point of view of upward movement and as such the piston 8 tends to counteract via the spring 26 the tendency for the piston member 20 to oscillate under the influence of inrush of supply air.

Whilst the invention has been described more especially in relation to a dual circuit trailer relay valve for a pneumatic braking system, the invention is equally applicable to other forms of relay valve.

Whilst the O-ring 16 of the seal shown in Fig. 2 is of circular cross-section, the seal may be designed to be of rectangular or even wedge shaped configuration.

Furthermore whilst the invention is described in the foregoing more particularly in relation to a relay valve with a pressure input signal oscillation problems may be encountered in other types of self lapping valve with a mechanical input signal. For example a fluid pressure control valve such as a foot valve which is operable by an applied force via a spring. By applying the invention to a pressure responsive member of such a self-lapping valve such oscillation may equally be prevented or reduced.

## Claims

1. A self-lapping relay valve including a double valve arrangement (10, 11, 29) which controls the connection between a delivery port (3) and an exhaust port (15) or a port for connection to a source of supply pressure, a pressure responsive means (8, 20) which in operation is urged in a first direction in response to a force or control fluid pressure in a sense to cause the valve to close a passage from the delivery port to the exhaust port and open a passage from the supply port to the delivery port and which is urged in a second opposite direction in response to delivery port pressure in a sense to cause the valve to close off the supply passage and open the passage to the exhaust port, characterised by said pressure responsive means having a seal (16) which is designed to provide under the influence of fluid pressure an appreciably greater resistance to movement in said second of the said directions than in the first of said directions.

2. A self-lapping valve as claimed in claim 1 characterised by the pressure responsive means being a piston and by said seal (16) being a piston seal.

3. A self-lapping valve as claimed in claim 2 characterised by the piston seal consisting of an annular groove carrying a resilient seal member and characterised by said groove being of greater depth adjacent one flank (35) of the groove than adjacent the other flank (36) of the groove whereby the resilient seal member (16) exerts different radial forces between the piston and the wall of a cylinder in which it moves when urged by fluid pressure towards the respective one flank or the other flank of the groove.

4. A self-lapping valve as claimed in claim 3 characterised by the flank of greater depth being the flank (35) which when subject to predominant fluid pressure tends to produce the movement in said first direction.

## Patentansprüche

1. Selbstüberlappendes Relaisventil, mit einer Doppelventilausführung (10, 11, 29), welches die Verbindung zwischen einer Abgabeöffnung (3) und einer Auslaßöffnung (15) oder einer Öffnung für die Verbindung mit einer Lieferdruckquelle steuert, und mit einer auf Druck ansprechenden Einrichtung (8, 20), die beim Arbeiten beim Ansprechen auf eine Kraft bzw. einen Steuerarbeitsmitteldruck in einem Sinn gedrückt wird, daß das Ventil veranlaßt wird, einen Durchgang von der Abgabeöffnung zu der Auslaßöffnung zu schließen und einen Durchgang von der Lieferöffnung zu der Abgabeöffnung zu öffnen, und die beim Ansprechen auf den Abgabeöffnungsdruck in einer zweiten entgegengesetzten Richtung gedrückt wird in einem Sinn, daß das Ventil veranlaßt wird, den Lieferdurchgang zu schließen und den Durchgang zu der Auslaßöffnung zu öffnen, dadurch gekennzeichnet, daß die auf Druck ansprechende Einrichtung eine Dichtung (16) aufweist, die dazu gestaltet ist, unter dem Einfluß von Arbeitsmitteldruck gegen Bewegung in der zweiten der genannten Richtungen einen Widerstand zu schaffen, der bemerkenswert größer ist als der Widerstand gegen Bewegung in der ersten der genannten Richtungen.

2. Selbstüberlappendes Ventil nach Anspruch 1, dadurch gekennzeichnet, daß die auf Druck ansprechende Einrichtung ein Kolben ist, unde daß die genannte Dichtung (16) eine Kolbendichtung ist.

3. Selbstüberlappendes Ventil nach Anspruch 2, dadurch gekennzeichnet, daß die Kolbendichtung aus einer ringförmigen Nut besteht, die einen federnden Dichtungsteil trägt, und dadurch gekennzeichnet, daß die Nut nahe einer Flanke (35) von ihr eine größere Tiefe als nahe ihrer anderen Flanke (36) hat, wodurch der federnde Dichtungsteil (16) unterschiedliche Radialkräfte zwischen dem Kolben und der Wand eines Zylinders, in welcher er sich bewegt, ausübt, wenn er durch Arbeitsmitteldruck in Richtung gegen die betrefffende eine Flanke oder die andere Flanke der Nut gedrückt wird.

4. Selbstüberlappendes Ventil nach Anspruch 3, dadurch gekennzeichnet, daß die Flanke größerer Tiefe die Flanke (35) ist, die, wenn sie vorherrschendem Arbeitsmitteldruck unterworfen wird, das Bestreben hat, die Bewegung in der genannten ersten Richtung zu erzeugen.

**Revendications**

1. Une vanne relais à recouvrement automatique comprenant un agencement (10, 11, 29) à double soupape qui commande le raccordement entre un orifice de distribution (3) et un orifice d'échappement (15) ou un orifice destiné à être raccordé à une source de pression d'alimentation, des moyens (8, 20) sensibles à la pression qui, en service, sont repoussés dans une première direction en réponse à une force ou à une pression de fluide de commande dans un sens qui provoque la fermeture par la vanne d'un passage allant de l'orifice de distribution à l'orifice d'échappement et l'ouverture par la vanne d'un passage allant de l'orifice d'alimentation à l'orifice de distribution et qui sont repoussés dans une seconde direction opposée en réponse à la pression régnant à l'orifice de distribution dans un sens qui provoque la fermeture par la vanne du passage d'alimentation et l'ouverture par la vanne de l'orifice d'échappement, caractérisée par le fait que lesdits moyens sensibles à la pression comportent un joint d'étanchéité (16) qui est agencé de manière à produire, sous l'influence d'une pression de fluide, une résistance nettement plug grande au déplacement dans la seconde desdites directions que dans la première desdites directions.

2. Une vanne à recouvrement automatique telle que revendiquée dans la revendication 1, caractérisée par le fait que les moyens sensibles à la pression sont constitués par un piston et par le fait que ledit joint d'étanchéité (16) est un joint d'étanchéité de piston.

3. Une vanne á recouvrement automatique tell que revendiquée dans la revendication 2, caractérisée par le fait que le joint d'étanchéité de piston est constitué par une rainure annulaire portant un organe d'étanchéité élastique et caractérisée par le fait que la rainure a une plus grande profondeur au voisinage d'un flanc (35) de la rainure qu'au voisinage de l'autre flanc (36) de la rainure de sorte que l'organe d'étanchéité élastique (16) exerce des forces radiales différentes entre le piston et la paroi d'un cylindre dans lequel il se déplace lorsqu'il est repoussé par une pression de fluide en direction respectivement du premier flanc ou de l'autre flanc de la rainure.

4. Une vanne à recouvrement automatique tell que revendiquée dans la revendication 3, caractérisée par le fait que la flanc qui a une plus grande profondeur est le flanc (35) qui, lorsqu'il est soumis à la pression de fluide prédominante, tend à produire le mouvement dans ladite première direction.

FIG.1

FIG.2